# NEUE EUROPÄISCHE PATENTSCHRIFT

(11) **EP 2 903 076 B2**
(45) Veröffentlichungstag und Bekanntmachung des Hinweises auf die Entscheidung über den Einspruch: **10.08.2022**
(45) Hinweis auf die Patenterteilung: 19.12.2018
(21) Anmeldenummer: 14199756.9
(22) Anmeldetag: 22.12.2014
(51) Int. Cl.: H01M 10/625, B60L 11/18, H01M 10/663, H01M 10/6569, H01M 10/613

(54) **Fahrzeugkühlkreislauf**
Vehicle cooling circuit
Circuit de refroidissement d'un véhicule

(30) Priorität: 27.01.2014 DE 102014001022
(43) Veröffentlichungstag der Anmeldung: 05.08.2015
(73) Patentinhaber: Liebherr-Transportation Systems GmbH & Co. KG, 2100 Korneuburg (AT)
(72) Erfinder: Presetschnik, Andreas, 1160 Wien (AT); Hense, Klaus, 2514 Traiskirchen (AT)
(74) Vertreter: Laufhütte, Dieter

(56) Entgegenhaltungen:
- EP-A1- 2 273 894
- EP-A2- 0 467 189
- EP-A2- 0 566 854
- EP-A2- 1 266 779
- EP-A2- 2 420 771
- WO-A1-2011/079904
- WO-A1-2011/085760
- WO-A1-2012/172751
- WO-A1-2012/172751
- DE-A1- 3 130 390
- DE-A1-102009 054 186
- DE-A1-102009 056 083
- DE-A1-102010 042 122
- FR-A1- 2 884 058
- US-A- 4 415 847
- US-A1- 2005 022 983
- US-A1- 2012 085 512

## Beschreibung

Die Erfindung betrifft einen Fahrzeugkühlkreislauf zur Kühlung einer temperaturerhöhenden Einrichtung in dem Fahrzeug.

Bei der Entwicklung von neuen Fahrzeuggenerationen besteht das Problem, dass dort temperaturerhöhende Einrichtungen, wie beispielsweise Batterien oder Brennstoffzellen verwendet werden, die während des Betriebs gekühlt werden müssen. Hierbei müssen deutlich höhere Wärmelasten abgeführt werden als dies bei herkömmlichen Fahrzeugen mit Verbrennungsmotoren notwendig war. Da die Abfuhr der Wärmelasten sehr große Wärmeübertrager und sehr hohe Luftvolumenströme an Kühlluft erfordern würden, ist es beispielsweise aus der US 4,415,847 A bekannt zur Kühlung einer temperaturerhöhenden Einrichtung mittels einem in einem Kühlmittelkreislauf geführten Kühlmittels einen Kühlmittelkreislauf vorzusehen, der mit einem Kältemittelkreislauf kombiniert wird. Der Aufbau des entsprechenden Fahrzeugkühlkreislaufs der US 4,415,847 A ergibt sich schematisch aus Figur 1. Hier ist ein Kühlmittelkreislauf 10 mit einem Kältemittelkreislauf 12 über einen als Verdampfer ausgebildeten Wärmetauscher 14 gekoppelt. Der Kühlmittelkreislauf 10 weist eine Kühlmittelleitung 16 auf, durch die das Kühlmittel transportiert wird. Mit 18 ist eine Batterie bezeichnet, die über das Kühlmittel gekühlt wird. Das Kühlmittel selbst wird aus einem Reservoir 17 mittels einer Pumpe 20 abgezogen. In dem als Verdampfer ausgeführten Wärmetauscher 14 wird das Kühlmittel mittels dem im Kältekreislauf 12 gekühlten Kältemittel heruntergekühlt. Der Kältemittelkreislauf weist eine Kältemittelleitung 22, einen Kompressor 24, einen Kondensator 26 und ein Entspannungsventil 28 auf. Der Kondensator 26 kann über einen Ventilator 30 mit Kühlluft beaufschlagt werden. In der Kühlmittelleitung 16 ist ein Bypass Ventil 32 vorgesehen, mit dem das Kühlmittel in der Kühlmittelleitung 16 ganz oder teilweise am Verdampfer 14 vorbeigeführt werden kann. Diese Kühlkreislaufschaltung hat den Nachteil, dass der Massenstrom an Kühlflüssigkeit, der durch den Verdampfer des Kältekreises fließt, nicht beliebig reduziert werden kann. Es muss in Abhängigkeit vom Betriebspunkt immer eine Mindestkälteleistung in den Kühlkreislauf eingebracht werden. Dies führt dazu, dass im mit dem Kühlmittelkreislauf gekoppelten Kältemittelkreislauf eine aufwendige Teillastregelung (hier nicht näher dargestellt) vorgesehen werden muss.

Aus der EP 1 266 779 B1 ist ein Fahrzeugkühlkreislauf bekannt, wie er im Prinzip in der Figur 2 dargestellt ist. Auch hier ist ein Kühlmittelkreislauf 10 über einen als Verdampfer ausgeführten Wärmetauscher 14 mit einem Kältemittelkreislauf 12 gekoppelt. Der Kältemittelkreislauf 12 ist wiederum konventionell aufgebaut und weist eine Kältemittelleitung 22, einen Kompressor 24, einen Kondensator 26, ein Expansionsventil 28 und einen Lüfter 30 auf. Der Kühlmittelkreislauf wiederum kühlt beispielsweise eine Batterie 18, wobei das Kühlmittel durch eine Kühlmittelleitung 16 fließt und über eine Pumpe 20 umgewälzt wird. Entsprechend der EP 1 266 779 B1 ist im Kühlmittelkreislauf zusätzlich ein Kühler 34 vorgesehen, der gemeinsam mit dem Kondensator 26 des Kältemittelkreislaufs mit Kühlluft beaufschlagbar ist. Der Kühler 34 ist in Strömungsrichtung des mit der Pumpe 20 umgewälzten Kühlmittels gesehen stromaufwärts des Wärmetauschers 14 und stromabwärts zur temperaturerhöhenden Einrichtung (beispielsweise der Batterie 18) angeordnet. Hierdurch bedingt kann der Kühler nicht dazu benutzt werden, eventuell zuviel durch den Verdampfer in den Kühlkreislauf eingebrachte Kälteleistung im Teillastbetrieb wieder an die Umgebung abzugeben. Ein weiterer Fahrzeugkühlkreislauf ist in WO 2011/085760 offenbart.

Die Aufgabe der Erfindung besteht darin, einen gattungsgemäßen Fahrzeugkühlkreislauf zur Kühlung einer temperaturerhöhenden Einrichtung, insbesondere einer Batterie, mittels einem in einem Kühlmittelkreislauf geführten Kühlmittel derart weiterzubilden, dass auf eine komplizierte Teillastregelung im Kältekreislauf weitgehend verzichtet werden kann und so die gesamte Systemarchitektur vereinfacht werden kann.

Erfindungsgemäß wird diese Aufgabe durch die Kombination der Merkmale des Anspruchs 1 gelöst.

Durch die erfindungsgemäße Anordnung des Fahrzeugkühlkreislaufs werden die einzelnen Komponenten derart miteinander verschaltet, dass diese bei Verwendung eines Kältekreises ohne die Notwendigkeit zu einer Teillastlösung, die zur Anpassung der zur Verfügung gestellten Kälteleistung führen würde, das Kühlmittel auf die gewünschte Kühlmitteleintrittstemperatur für die zu kühlende temperaturerhöhende Einrichtung gekühlt werden kann. Im Idealfall können sogar die zusätzlich notwendigen Komponenten für die Teillastregelung eines Kältekreises eingespart werden, wodurch die Systemarchitektur des gesamten Fahrzeugkühlkreislaufs wesentlich vereinfacht wird.

Aus den sich an den Hauptanspruch anschließenden Unteransprüchen ergeben sich bevorzugte Ausführungsformen der Erfindung.

Der Kühlluftstrom wird durch einen Ventilator erzeugt. Selbstverständlich kann zusätzlich der Kühlluftstrom des Fahrtwindes während der Fortbewegung des Fahrzeuges genutzt werden.

Gemäß einer besonderen Ausgestaltung der Erfindung kann der Kühler im Kühlluftstrom vor dem Kondensator angeordnet sein.

Eine andere bevorzugte Ausgestaltung der Erfindung kann auch darin gegeben sein, dass der Kühler im Kühlluftstrom nach dem Kondensator angeordnet ist. Schließlich kann es vorteilhaft sein, wenn in der Kühlmittelleitung ein zusätzliches Bypass Ventil derart angeordnet ist, dass das Kühlmittel ganz oder teilweise an dem Wärmetauscher vorbeiführbar ist.

Weitere Merkmale, Einzelheiten und Vorteile der Erfindung ergeben sich aus den in der Zeichnung dargestellten Ausführungsbeispielen. Es zeigen:

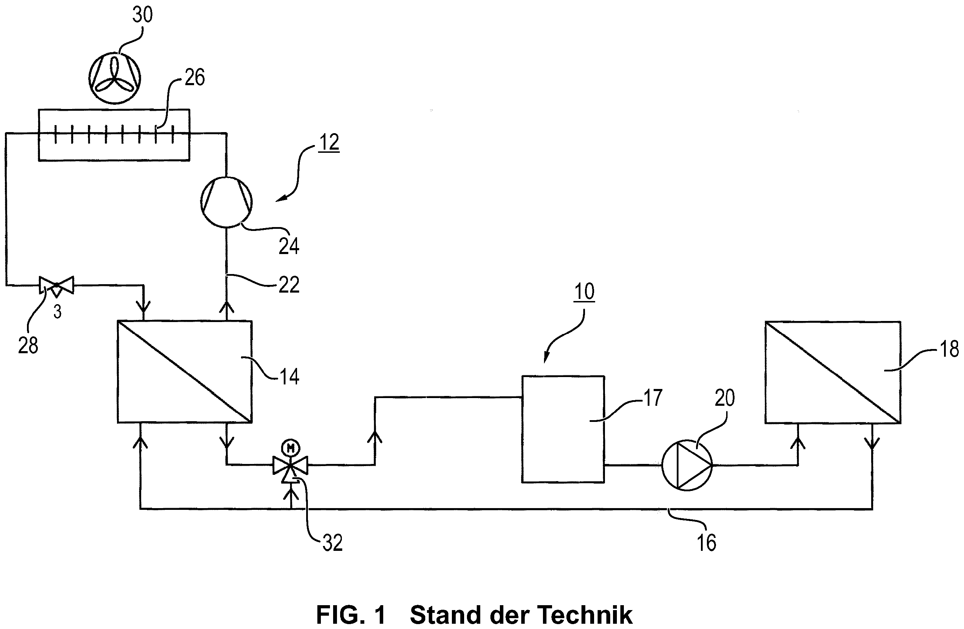

- Figur 1:: ein Fahrzeugkühlreislauf nach einem Stand der Technik wie er aus der US 4,415,847 A bekannt ist,

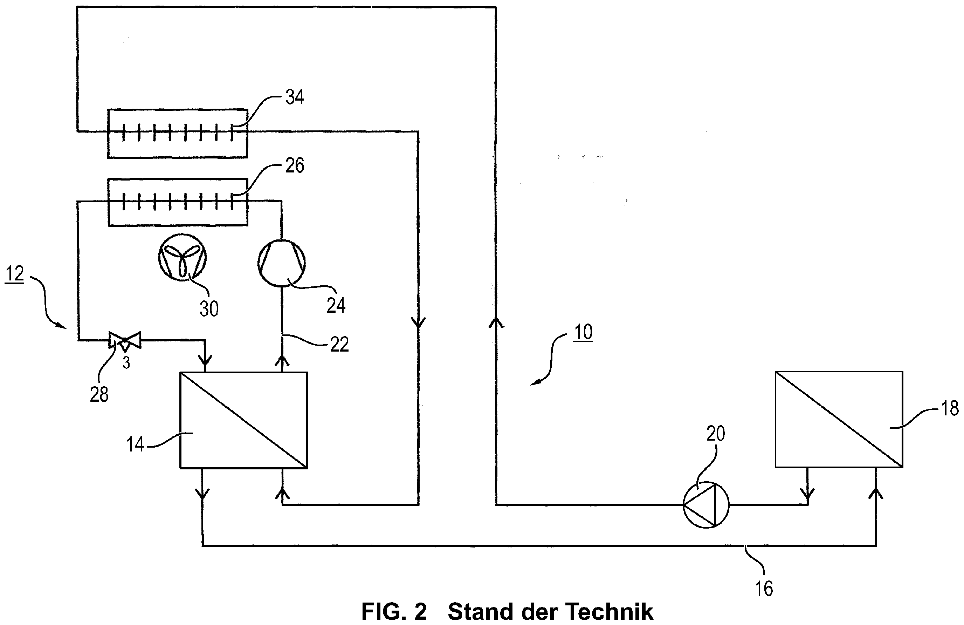

- Figur 2:: einen Fahrzeugkühlkreislauf wie er aus einem Stand der Technik gemäß der EP 1 266 779 B1 bekannt ist,
- Figur 3:: eine erste Ausführungsform eines Fahrzeugkühlkreislaufs nach der vorliegenden Erfindung,
- Figur 4:: eine zweite Ausführungsform eines erfindungsgemäßem Fahrzeugkühlkreislaufs nach der vorliegenden Erfindung und
- Figur 5:: eine dritte Ausführungsform eines Fahrzeugkühlkreislaufs nach der vorliegenden Erfindung.

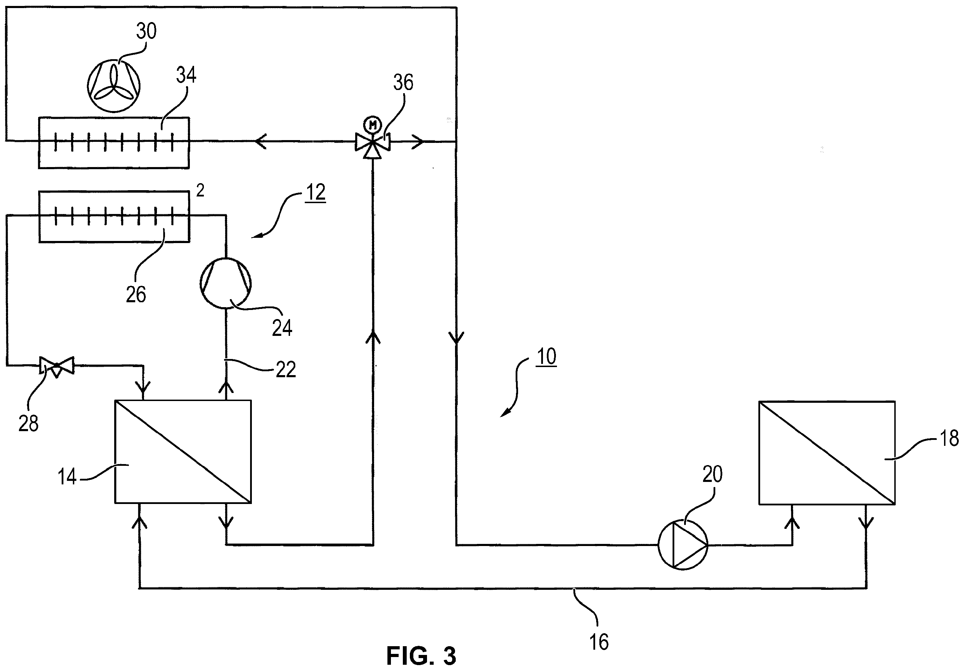

Der erfindungsgemäße Kühlmittelkreislauf 10 nach dem ersten Ausführungsbeispiel, wie es in Figur 3 dargestellt ist, ist über einen als Verdampfer ausgebildeten Wärmetauscher 14 mit einem Kältemittelkreislauf 12 gekoppelt. Der Kühlmittelkreislauf weist eine Kühlmittelleitung 16 auf, in welcher das Kühlmittel über eine Pumpe 20 in Pfeilrichtung gemäß Figur 3 gefördert wird. Über das Kühlmittel wird eine temperaturerhöhende Einrichtung 18, wie beispielsweise eine Fahrzeugbatterie eines Elektrofahrzeugs, gekühlt. Ferner ist ein Kühler 34 vorgesehen, der mittels eines Kühlluftstroms, der über den Fahrtwind des Fahrzeugs und/oder einen Ventilator 30 erzeugt wird, gekühlt wird. Eine weitere Kühlung des Kühlmittelkreislaufs erfolgt über den Wärmetauscher 14, der als Verdampfer des mit dem Kühlmittelkreislauf gekoppelten Kältemittelkreislaufs 12 ausgebildet ist. Der Kältemittelkreislauf 12 umfasst neben diesem Verdampfer 14 in bekannter Weise eine Kältemittelleitung 22, einen Kompressor 24, einen Kondensator 26 und ein Expansionsventil 28. Der vorgenannte Begriff "Verdampfer" ist im hier dargestellten Zusammenhang über seine eigentliche Wortbedeutung hinaus verwendet. Wird beispielsweise Kohlendioxid als Kühlmittel eingesetzt, dann ist der "Kondensator" 26 des Kältemittelkreislaufs12 als "Gaskühler" 26 wirksam.

Wie aus der Figur 3 ersichtlich, ist der Kühler 24 in Strömungsrichtung des Kühlmittels im Kühlmittelkreislauf gesehen (vgl. die Pfeilrichtung) stromabwärts des Wärmetauschers 14 angeordnet. Des weiteren ist in der Kühlmittelleitung 16 ein Bypass Ventil 36 derart angeordnet, dass das Kühlmittel ganz oder teilweise an dem Kühler 24 vorbeiführbar ist.

In der Ausführungsform gemäß Figur 3 ist der Verflüssiger 26 im Luftstrom, der beispielsweise durch den Ventilator 30 erzeugt wird, vor dem Kühler 34 angeordnet. Hierdurch ist eine größere Temperaturdifferenz am Kühler erzeugbar. Dies erhöht die mögliche Kapazität zur "Kälteabfuhr" am Kühler 34 bei aktivem Kältekreis 12.

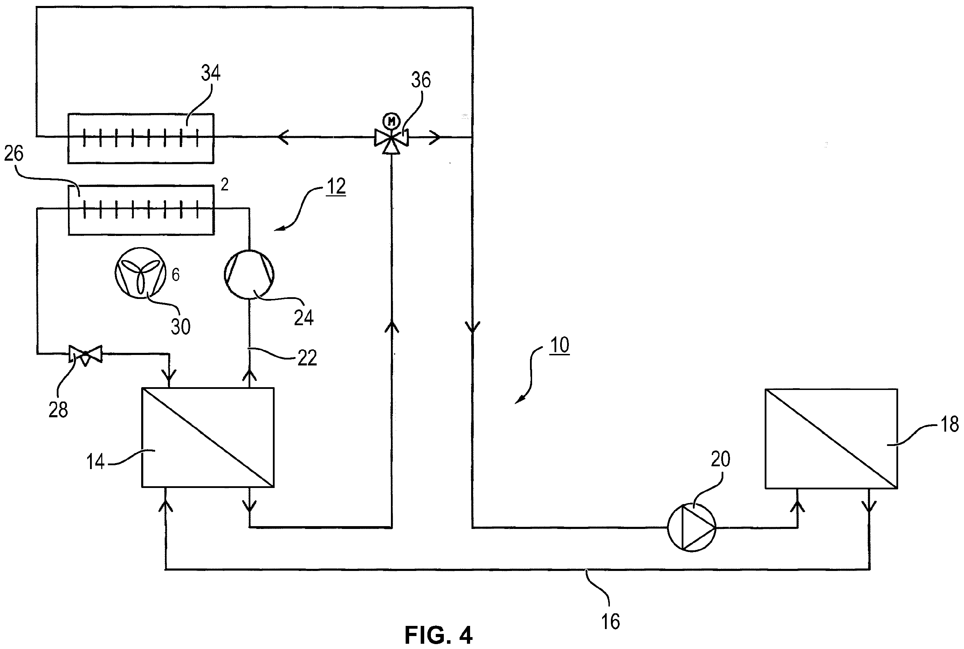

Die Ausführungsform gemäß Figur 4 entspricht weitestgehend derjenigen gemäß Figur 3. Hier ist lediglich der Verflüssiger 26 im Luftstrom nach dem Kühler 24 angeordnet. Hierdurch ergibt sich eine geringere Kapazität an "Kälteabfuhr" am Kühler bei aktivem Kältekreislauf 12. Zum anderen besteht die Möglichkeit bei sehr hohen Umgebungstemperaturen durch aktives Kühlen des Luftstroms durch den Verflüssiger 26 mit dem Kühler 34 die Kondensationstemperatur zu senken und so die Funktionsfähigkeit des Fahrzeugkühlkreislaufs bei hohen Umgebungstemperaturen vergleichsweise länger zu gewährleisten. Die hier dargestellte Systemarchitektur eröffnet die Möglichkeit zur Regelung der Kondensationstemperatur im Kältekreislauf 12.

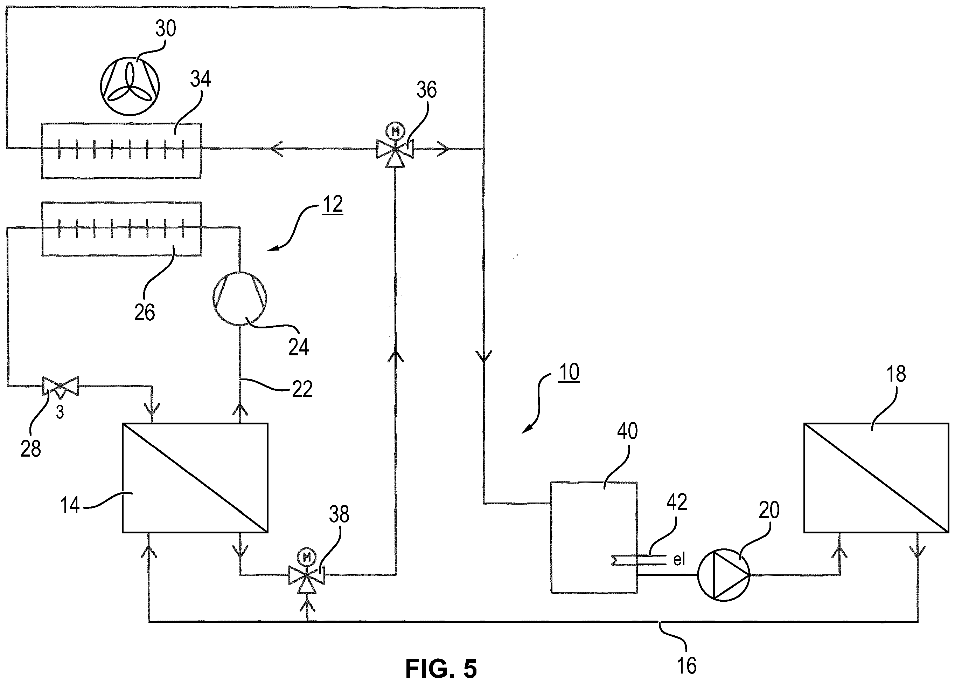

Schließlich ergibt sich aus der Figur 5 ein drittes Ausführungsbeispiel des erfindungsgemäßen Fahrzeugkühlkreislaufs. Der Aufbau entspricht im Wesentlichen demjenigen gemäß Figur 3. Allerdings ist noch ein zusätzliches Bypass Ventil 38 vorgesehen, das derart in der Kühlmittelleitung 16 angeordnet ist, dass das Kühlmittel ganz oder teilweise an dem Wärmetauscher 14 vorbeiführbar ist. Durch diesen zusätzlichen Bypass 38, mit dem der als Verdampfer ausgeführte Wärmetauscher 14 umgangen werden kann, wird eine weitere Möglichkeit zur Teillastregelung eröffnet.

Zusätzlich kann ein Kühlmittelbehälter 40 vorgesehen sein, in dem das Kühlmittel über eine elektrische Widerstandsheizung 42 auf ein gewünschtes Temperaturniveau temperiert werden kann.

Mit den erfindungsgemäßen Fahrzeugkühlkreisläufen können unterschiedliche Betriebsmodi gefahren werden. Gemäß einem ersten Betriebsmodus, bei dem die Umgebungstemperatur höher als die geforderte Kühlmitteleintrittstemperatur in die Batterie 18 ist, ist der Kältekreislauf 12 aktiv. Das bedeutet, dass der Verdichter 24 eingeschaltet ist und dass in der Ausführungsvariante gemäß. Figur 5 das Verdampfer Bypass Ventil 38 den Weg durch den als Verdampfer ausgeführten Wärmetauscher 14 freigibt, wobei der Verdampfer Bypass geschlossen ist. Das Kühler Bypass Ventil 36 öffnet den Kühler Bypass und schließt den Weg zum Kühler 36.

Soweit der Kältemittelkreislauf 12 am Austritt aus dem Verdampfer 14 eine niedrigere als die geforderte Kühlmitteleintrittstemperatur aufweist, kann durch teilweises Öffnen des Verdampfer Bypasses 38 die Temperatur des Kühlmittels erhöht werden. Der maximal zulässige Öffnungsgrad des Verdampfer Bypasses 38 ist vom Betriebspunkt des Kältemittelkreislaufs und vom verwendeten Verdichter 24 abhängig. Ist die geforderte Kühlmitteleintrittstemperatur immer noch höher als die bereitgestellte Kühlmitteltemperatur, kann durch schrittweises Öffnen des Kühler Bypass Ventils 36 der Zulauf zum Kühler 34 geöffnet werden, wobei gleichzeitig die Bypass Leitung zunehmend geschlossen wird. Hierdurch kann die Temperatur des nunmehr teilweise über den Kühler 34 geführten Kühlmittels weiter bis zur geforderten Kühlmitteleintrittstemperatur erhöht werden.

Liefert der Kühlkreislauf eine höhere als die geforderte Kühlmitteleintrittstemperatur kann durch Umkehrung der zuvor genannten Schritte die Kühlmitteltemperatur wieder bis zur minimal möglichen gesenkt werden, wobei hier eine minimale Temperatur dadurch erreicht werden kann, dass der Verdichter 24 eingeschaltet ist, dass das Kühlmittel vollständig über den Verdampfer 14 geführt wird und dass das weitgehend abgekühlte Kühlmittel nicht über den Kühler 34 geführt wird.

Für den Fall, dass die Umgebungstemperatur kleiner als die geforderte Kühlmitteleintrittstemperatur in die Batterie ist, reicht unter Umständen die übertragene Leistung am Kühler aus, um die Temperatur des Kühlmittels unter die geforderte Kühlmitteleintrittstemperatur zu senken. In diesem Fall muss der Kältemittelkreislauf 12 nicht aktiviert werden. Der Verdichter 24 kann ausgeschalten bleiben und das Verdampfer Bypass Ventil führt das Kühlmittel an den als Verdampfer ausgeführten Wärmetauscher 14 vorbei. Das Kühler Bypass Ventil 36 ist derart geschaltet, dass der gesamte Kältemittelstrom über den Kühler 34 geführt wird. Liefert der so eingestellte Kühlkreislauf eine niedrigere als die geforderte Kühlmitteleintrittstemperatur an der Batterie 18, kann durch schrittweises Öffnen des Kühler Bypass Ventils 36 die Temperatur des Kühlmittels weiter bis zur geforderten Kühlmitteleintrittstemperatur erhöht werden.

Ist die Umgebungstemperatur zwar geringer als die geforderte Kühlmitteleintrittstemperatur in die Batterie, reicht aber die übertragene Kühlleistung am Kühler 34 nicht aus, um das Kühlmittel auf die geforderte Kühlmitteleintrittstemperatur am Eingang der Batterie zu kühlen, wird stattdessen der Kältemittelkreislauf 12 aktiviert, indem der Verdichter 24 angestellt wird. Das Verdampfer Bypass Ventil 38 wird gleichzeitig so geschaltet, dass das Kühlmittel über den als Verdampfer ausgelegten Wärmetauscher 14 geführt wird. Die Teillastregelung erfolgt dann entsprechend des eingangs erläuterten Betriebsmodus.

Mit der in Figur 4 dargestellten Ausführungsvariante des Fahrzeugkühlkreislaufs kann in einem weiteren Betriebsmodus die Funktionsfähigkeit bei sehr hohen Außentemperaturen sichergestellt werden. Bei dieser Ausführungsvariante ist der Kondensator 22 im Luftstrom nach dem Kühler 34 angeordnet. Hier ergibt sich im Unterschied zu der Schaltung gemäß der EP 1 266 779 B1 die Möglichkeit, den Luftstrom über den Kondensator 22 aktiv zu kühlen.

Zur Erläuterung ist diesbezüglich anzugeben, dass ab einer definierten Außentemperatur (beispielsweise 45°C) die geforderte Kühlmitteleintrittstemperatur nicht mehr erreicht werden kann. Andererseits besteht die Forderung, dass der Kältemittelkreislauf bis zu einer maximalen Außentemperatur (von beispielsweise 55°C) funktionsfähig bleibt.

Ist im Kältemittelkreislauf keine - wie auch immer ausgestaltete - Möglichkeit zur Leistungsreduktion vorgesehen, muss der Kältemittelkreislauf so ausgeführt sein, dass dieser auch bei Volllastbetrieb bei definierten Maximaltemperaturen betrieben werden kann. Das bedeutet, dass ein größerer Kondensator 26 bzw. ein erhöhter Luftstrom durch den Kondensator 26 notwendig ist.

Bei der Systemarchitektur nach der Figur 4 ist es allerdings möglich, den Kondensationsdruck zu senken, der eine limitierende Größe für die Funktionsfähigkeit des Fahrzeugkühlkreislaufs bei hohen Umgebungstemperaturen ist. Hierzu wird ein Teil der Kälteleistung, die am Verdampfer 14 in den Kühlkreislauf eingebracht wird, am Kühler dazu verwendet, die Temperatur des Luftstroms am Kondensatoreintritt zu senken und somit auch die Kondensationstemperatur (entspricht dem Kondensationsdruck) zur Wärmeabfuhr. Das Kühler Bypass Ventil 36 öffnet schrittweise den Weg durch den Kühler 34 und schließt die Bypass Leitung.

Anhand der Ausführungsform gem. Figur 5 ist die Integration eines Flüssigkeitsbehälters 40 zur Aufnahme von Kühlmittel beispielhaft dargestellt. Diese Ausführungsvariante kann auch in den Ausführungsbeispielen gem. Figur 3 oder 4 vorgesehen sein. Desgleichen kann in der Ausführungsform gem. Figur 5 auf diesen zusätzlichen Flüssigkeitsbehälter 40 verzichtet werden.

Die Integration der elektrisch betriebenen Heizung 42 im Flüssigkeitsbehälter ist ebenfalls nur wahlweise vorgesehen. Über diese Heizung kann beispielsweise die Kühlmitteleintrittstemperatur auf einer Minimaltemperatur gehalten werden und bei Bedarf auch erhöht werden.

Gemäß einer weiteren Ausführungsform kann der Lüfter 30 variabel eingestellt werden, um hier die Luftmenge des Kühlluftstroms zu variieren.

## Patentansprüche

1. Fahrzeugkühlkreislauf zur Kühlung einer temperaturerhöhenden Einrichtung (18), insbesondere einer Batterie (18), mittels einem in einem Kühlmittelkreislauf (12) geführten Kühlmittel, wobei der Kühlmittelkreislauf (12) eine Kühlmittelleitung (16), mindestens einen Kühler (34), eine Kühlmittelpumpe (20) und mindestens einen als Verdampfer ausgelegten Wärmetauscher (14) aufweist, über den der Kühlmittelkreislauf (12) mit einem Kältemittelkreislauf gekoppelt ist, der zusätzlich eine Kältemittelleitung (22), mindestens einen Kompressor (24), mindestens einen Kondensator (26) und mindestens ein Expansionsventil aufweist,
**dadurch gekennzeichnet,**
**dass** der mindestens eine Kühler (34) in Strömungsrichtung des Kühlmittels im Kühlmittelkreislauf (12) stromabwärts des mindestens einen Wärmetauschers (14) und stromaufwärts der temperaturerhöhenden Einrichtung (18) angeordnet ist und dass in der Kühlmittelleitung (16) mindestens ein ganz oder teilweise öffenbares Bypass Ventil (36) derart angeordnet ist, dass das Kühlmittel ganz oder teilweise an dem mindestens einen Kühler (34) vorbeiführbar ist, wobei sowohl der Kühler (34) als auch der Kondensator (26) einem Kühlluftstrom, der durch einen Ventilator (30) erzeugbar ist, zugeordnet sind.

2. Fahrzeugkühlkreislauf nach Anspruch 1, **dadurch gekennzeichnet, dass** der Kühler (34) im Kühlluftstrom vor dem Kondensator (26) angeordnet ist.

3. Fahrzeugkühlkreislauf nach Anspruch 1, **dadurch gekennzeichnet, dass** der Kühler (34) im Kühlluftstrom nach dem Kondensator (26) angeordnet ist.

4. Fahrzeugkühlkreislauf nach einem der vorangehenden Ansprüche, **dadurch gekennzeichnet, dass** in der Kühlmittelleitung (16) ein zusätzliches Bypass Ventil (38) derart angeordnet ist, dass das Kühlmittel ganz oder teilweise an dem Wärmetauscher (14) vorbeiführbar ist.

5. Fahrzeugkühlkreislauf nach einem der vorangehenden Ansprüche, **dadurch gekennzeichnet, dass** in der Kühlmittelleitung (16) ein Flüssigkeitsbehälter (40) zur Aufnahme von Kühlmittel integriert ist.

6. Fahrzeugkühlkreislauf nach Anspruch 5, **dadurch gekennzeichnet, dass** im Kühlmittelkreis, insbesondere im Flüssigkeitsbehälter (40), eine Heizung (42) integriert ist.

7. Fahrzeugkühlkreislauf nach Anspruch 1, **dadurch gekennzeichnet, dass** der Ventilator (30) eine einstellbare Drehzahl zur Einstellung des Kühlluftvolumenstroms aufweist.

8. Fahrzeug, insbesondere Schienenfahrzeug, mit einem Fahrzeugkreislauf nach einem der vorangegangenen Ansprüche.

## Claims

1. A vehicle cooling circuit for cooling a temperature-increasing device (18), in particular a battery (18), by means of a coolant conducted in a coolant circuit (12), wherein the coolant circuit (12) comprises a coolant line (16), at least one cooler (34), a coolant pump (20), and at least one heat exchanger (14), which is configured as an evaporator and by means of which the coolant circuit (12) is coupled to a coolant circuit which additionally comprises a coolant line (22), at least one compressor (24), at least one condenser (26), and at least one relief valve,
**characterised in that**
the at least one cooler (34) is arranged downstream of the at least one heat exchanger (14) and upstream of the temperature-increasing device (18) in the flow direction of the coolant in the coolant circuit (12), and **in that** at least one bypass valve (36), which can be opened fully or partially, is arranged in the coolant line (16) in such a way that the coolant can be fully or partially conducted past the at least one cooler (34), wherein both the cooler (34) and the condenser (26) are associated with a cooling air flow, which can be generated by a fan (30).

2. The vehicle cooling circuit according to claim 1, **characterised in that** the cooler (34) is arranged before the condenser (26) in the cooling air flow.

3. The vehicle cooling circuit according to claim 1, **characterised in that** the cooler (34) is arranged after the condenser (26) in the cooling air flow.

4. The vehicle cooling circuit according to one of the preceding claims, **characterised in that** an additional bypass valve (38) is arranged in the coolant line (16) in such a way that the coolant can be fully or partially conducted past the heat exchanger.

5. The vehicle cooling circuit according to one of the preceding claims, **characterised in that** a liquid container (40) for receiving coolant is integrated in the coolant line (16).

6. The vehicle cooling circuit according to claim 5, **characterised in that** a heater (42) is integrated in the coolant circuit, in particular in the liquid container (40).

7. The vehicle cooling circuit according to claim 1, **characterised in that** the fan (30) has an adjustable speed for adjusting the cooling air volume flow.

8. A vehicle, in particular rail vehicle, comprising a vehicle circuit according to one of the preceding claims.

## Revendications

1. Circuit de refroidissement de véhicule pour refroidir un dispositif augmentant la température (18), notamment une batterie (18), au moyen d'un fluide de refroidissement acheminé dans un circuit de fluide de refroidissement (12), le circuit de fluide de refroidissement (12) présentant une conduite de fluide de refroidissement (16), au moins un refroidisseur (34), une pompe à fluide de refroidissement (20) et au moins un échangeur de chaleur (14) conçu sous forme d'évaporateur, par l'intermédiaire duquel le circuit de fluide de refroidissement (12) est couplé à un circuit de réfrigérant, qui présente en outre une conduite de réfrigérant (22), au moins un compresseur (24), au moins un condenseur (26) et au moins une soupape d'expansion,
**caractérisé en ce que**
l'au moins un refroidisseur (34) est agencé dans la direction d'écoulement du fluide de refroidissement dans le circuit de fluide de refroidissement (12) en aval de l'au moins un échangeur de chaleur (14) et en amont du dispositif augmentant la température (18) et **en ce qu'**au moins une soupape de dérivation (36) pouvant être ouverte entièrement ou partiellement est agencée dans la conduite de fluide de refroidissement (16) de telle sorte que le fluide de refroidissement peut passer entièrement ou partiellement devant l'au moins un refroidisseur (34), le refroidisseur (34) et le condenseur (26) étant tous deux associés à un flux d'air de refroidissement qui peut être généré par un ventilateur (30).

2. Circuit de refroidissement de véhicule selon la revendication 1, **caractérisé en ce que** le refroidisseur (34) est agencé dans le courant d'air de refroidissement avant le condenseur (26).

3. Circuit de refroidissement de véhicule selon la revendication 1, **caractérisé en ce que** le refroidisseur (34) est agencé dans le courant d'air de refroidissement après le condenseur (26).

4. Circuit de refroidissement de véhicule selon l'une quelconque des revendications précédentes, **caractérisé en ce qu'**une soupape de dérivation supplémentaire (38) est agencée dans la conduite de fluide de refroidissement (16) de telle sorte que le fluide de refroidissement peut passer entièrement ou partiellement devant l'échangeur de chaleur (14).

5. Circuit de refroidissement de véhicule selon l'une quelconque des revendications précédentes, **caractérisé en ce qu'**un réservoir de liquide (40) pour recevoir le fluide de refroidissement est intégré dans la conduite de fluide de refroidissement (16).

6. Circuit de refroidissement de véhicule selon la revendication 5, **caractérisé en ce qu'**un chauffage (42) est intégré dans le circuit de fluide de refroidissement, notamment dans le réservoir de liquide (40).

7. Circuit de refroidissement de véhicule selon la revendication 1, **caractérisé en ce que** le ventilateur (30) présente une vitesse de rotation réglable pour régler le débit volumique d'air de refroidissement.

8. Véhicule, notamment véhicule ferroviaire, comprenant un circuit de véhicule selon l'une quelconque des revendications précédentes.
